# EUROPÄISCHE PATENTSCHRIFT

(11) **EP 1 393 848 B1**
(45) Veröffentlichungstag und Bekanntmachung des Hinweises auf die Patenterteilung: **03.10.2007**
(21) Anmeldenummer: 03102475.5
(22) Anmeldetag: 08.08.2003
(51) Int. Cl.: B23K 26/00, B23K 26/067, B29C 65/00

(54) **Anordnung zur Laser-Schweissung**
Laser welding device
Dispositif de soudage laser

(30) Priorität: 30.08.2002 DE 10240798
(43) Veröffentlichungstag der Anmeldung: 03.03.2004
(73) Patentinhaber: Hella KGaA Hueck & Co., 59552 Lippstadt (DE)
(72) Erfinder: Dirks, Heinz-Michael, 59558, Lippstadt (DE)

(56) Entgegenhaltungen:
- EP-A- 0 473 989
- EP-A- 0 997 261
- EP-A- 1 059 139
- US-A- 3 622 793
- US-A- 5 430 816
- PATENT ABSTRACTS OF JAPAN vol. 010, no. 368 (M-543), 9. Dezember 1986 (1986-12-09) & JP 61 162292 A (YUTAKA KANEDA), 22. Juli 1986 (1986-07-22)

## Beschreibung

Die Erfindung bezieht sich auf eine Anordnung gemäß dem Oberbegriff des Patentanspruchs 1 (siehe US-A-5 430 816).

Bei der Laser-Schweißung im Durchstrahlverfahren geht es um die Verbindung zweier Werkstücke, die aus einem an der Schweißstelle schmelzbaren Material, wie insbesondere Kunststoff, bestehen, von denen das eine laser-transparent und das andere laser-absorbierend ist. Durch Absorption des Laserlichtes wird die für den Anschmelzvorgang erforderliche Wärme erzeugt, was eine gewisse Intensität und Einwirkungsdauer des Laserlichts erfordert.

Bei den bekannten Lasergeräten ist ein einsträngiger Lichtleiter vorgesehen. Sind bei einer Werkstückpaarung mehrere Schweißstellen vorhanden, muß man entweder die Schweißstellen nacheinander bestrahlen oder eine entsprechende Anzahl von Laserschweißgeräten vorsehen. Im ersteren Fall müßte man das Auskopplungsende des Lichtleiters nach einem Bearbeitungsvorgang umsetzen oder es müßte die Verschweißung an den mehreren Schweißstellen in aufeinanderfolgende Arbeitsdurchgängen vorgenommen werden. Zum anderen ist der Einsatz mehrerer Laserschweißgeräte mit einem hohen Aufwand verbunden, in vielen Fällen kann er auch aus Platzgründen nicht realisiert werden.

Aus der Lichtleittechnik ist es bekannt, das Licht einer Lichtquelle auf mehrere Lichtleiter zu verteilen. Hierbei kommt es nicht darauf an, mit welcher Lichtdichte der einzelne Lichtleiter versorgt wird. Schon gar nicht geht es hierbei um eine Einwirkungsdauer des Lichtes, entweder ist die damit bezweckte Beleuchtung eingeschaltet oder nicht. Beim Laserschweißen hingegen ist an der Schweißstelle nicht nur eine bestimmte Lichtintensität erforderlich, es muß auch eine ausreichende Einwirkungsdauer des Laserlichtes vorgegeben werden, um eine einwandfreie Verbindung der Werkstücke zu erzielen. Diese Einwirkungsdauer liegt beim Durchstrahlverfahren selbst bei kleinen Werkstücken aus einem geeigneten Kunststoff im Bereich einiger Sekunden und hat somit einen erheblichen Einfluß auf die Dauer eines Fertigungszyklus.

Aus dem Dokument DE 199 42 250 A1 ist es bekannt, zum Laserschweißen die Laserstrahlung über ein Lichtleiterbündel an eine Schweißstelle heranzuführen. Hier geht es jedoch darum, am Auskopplungsende der Lichtleiter eine linienförmige oder flächige Schweißstelle abzudecken, die dadurch mit einer ausreichenden Lichtenergie versorgt wird, daß die in gleicher Weise wie die Auskopplungsenden angeordneten Einkopplungsenden der Lichtleiter gegenüber einer Mehrzahl von das Laserlicht erzeugenden Diodenbarren angeordnet sind.

Der Erfindung liegt die Aufgabe zugrunde, eine Anordnung zur Laser-Schweißung im Durchstrahlverfahren der eingangs genannten Art zu schaffen, mit der mit geringem zusätzlichen Aufwand zeitgleich eine Schweißung an voneinander beabstandeten Stellen der miteinander zu verbindenden Werkstücke durchgeführt werden kann.

Diese Aufgabe wird bei einer Anordnung zur Laserschweißung mit den Merkmalen des Patentanspruchs 1 gelöst.

Für die Erfindung ist wesentlich, daß man jeweils nur eine Laser-Lichtquelle benötigt, um beispielsweise drei oder vier Schweißstellen an den Werkstücken simultan mit der für die Schweißung notwendigen Lichtenergie versorgen zu können. So läßt sich die Zykluszeit für die Verschweißung der miteinander zu paarenden Werkstücke an mehreren Stellen erheblich verringern. Zwar kann es je nach Vorgabe einer begrenzten Strahlungsdauer erforderlich sein, eine Laser-Lichtquelle mit höherer Leistung vorsehen zu müssen, dieser Aufwand ist jedoch geringer, als mehrere Laser-Lichtquellen einsetzen zu müssen. Demgegenüber ergeben sich räumliche Vorteile jedenfalls dann, wenn an den miteinander zu verbindenden Werkstücken die Schweißstellen nicht allzu weit auseinanderliegen und zudem noch an schwer zugänglichen Stellen angeordnet sind. Auch können mit den vereinzelten Strängen des Lichtleiters Schweißstellen erreicht werden, die auf unterschiedlichen Ebenen liegen oder unterschiedliche Einstrahlwinkel erfordern. Insgesamt läßt sich an einer Schweißstation eine einzige Laser-Lichtquelle mit einem in Stränge aufgesplitteten Lichtleiter wesentlich leichter unterbringen als eine entsprechende Anzahl mehrerer Laser-Lichtquellen mit jeweils einem einsträngigen Lichtleiter.

Vorteilhafte Ausgestaltungsmerkmale der Erfindung ergeben sich aus den Unteransprüchen.

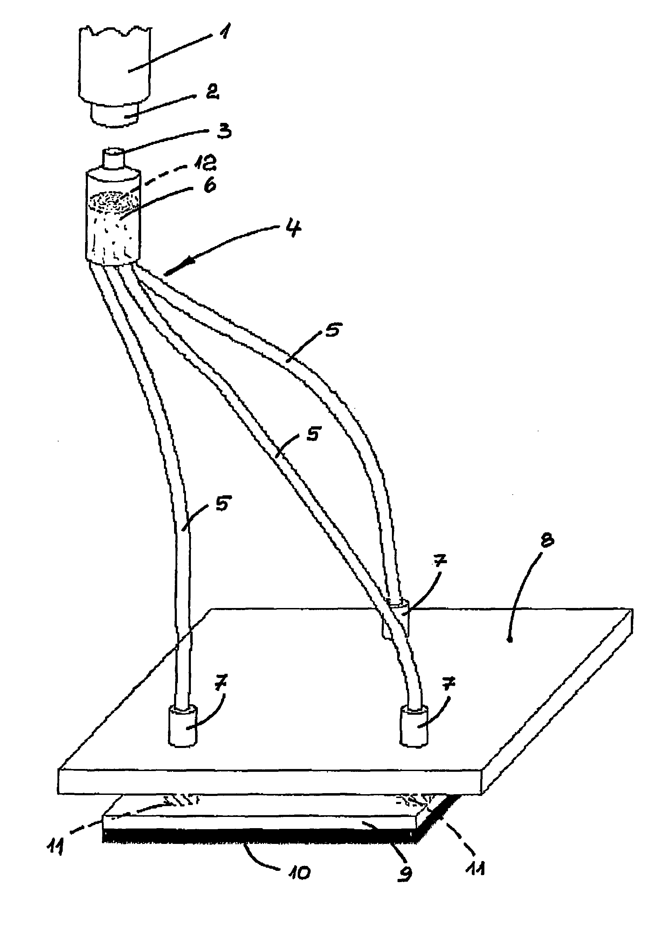

Die Erfindung wird nachfolgend anhand der Zeichnung an einem Ausführungsbeispiel noch näher erläutert. Die Zeichnung zeigt schematisch eine Anordnung zur Laser-Schweißung im Durchstrahlverfahren.

Im einzelnen erkennt man in der Zeichung eine teilweise dargestellte Laser-Lichtquelle 1, welche eine Auskopplungsoptik 2 aufweist. Dieser gegenüber ist eine Einkopplungsstelle 3 angeordnet, die Teil eines in besonderer Weise ausgeführten Lichtleiters 4 ist. Dieser Lichtleiter ist nämlich in einzelne Stränge 5 aufgeteilt, die jeweils aus einem Bündel von lichtleitenden Fasern bestehen. Die Stränge 5 des Lichtleiters 4 sind in Richtung zur Einkopplungsstelle 3 hin zusammengeführt und werden von einer Bündelungsvorrichtung 6 zusammengefaßt. Im Inneren dieser Bündelungsvorrichtung 6 sind die Stränge 5 derart miteinander verflochten, daß die Faserenden aller Stränge 5 gleichmäßig miteinander vermischt sind. Die in einer Ebene liegenden Stirnenden sämtlicher Fasern der Stränge 5 bilden eine Einstrahlfläche 12, an der je Flächeneinheit eine solche Anzahl von Fasern der einzelnen Stränge 5 vorhanden ist, wie es dem Verhältnis der Faserzahlen der Stränge 5 zueinander entspricht. Darüber hinaus kann auch noch eine bestimmte Ordnung der einzelnen Fasern der Stränge 5 an der Einkopplungsfläche 12 vorgesehen sein, indem je Flächeneinheit die Fasern der verschiedenen Stränge 5 einander abwechselnd so angeordnet sind, wie es wiederum dem Verhältnis der Faserzahlen der Stränge 5 zueinander entspricht. Am leichtesten ist eine gleichmäßige Verteilung der Fasern der einzelnen Stränge 5 dann zu erreichen, wenn jeder der Stränge 5 die gleiche Anzahl von lichtleitenden Fasern wie die übrigen Stränge hat.

Die aus der Bündelungsvorrichtung 6 vereinzelt austretenden Stränge 5 des Lichtleiters 4 haben an ihren von der Einkopplungsstelle 3 abliegenden Enden je eine Kollimationsoptik 7 zur Auskopplung des in Stränge 5 eingeleiteten Laserlichts. Die Kollimationsoptiken 7 sind an einer gemeinsamen Aufnahmevorrichtung 8 festgelegt, die Teil einer Schweißstation ist, an der zwei Werkstücke 9 und 10 miteinander durch Schweißung verbunden werden. Dies geschieht im sogenannten Durchstrahlverfahren, wozu es erforderlich ist, daß dasjenige Werkstück 9, von dessen Seite her die Lasereinstrahlung erfolgt, laser-transparent ist. Das zweite Werkstück 10, welches zumindest an vorgesehenen Schweißstellen 11 das erste Werkstück 9 kontaktiert, besteht aus einem laser-undurchlässigen Material, so daß an den Bestrahlungsstellen dieses Werkstückes 10, den Schweißstellen 11, die Energie des Laserlichts in Wärme umgesetzt wird. Hierdurch schmelzen die Materialien der beiden Werkstücke 9 und 10 an den Schweißstellen 11 an und verbinden sich miteinander.

Der besondere Vorzug der gezeigten Anordnung ist, daß die beiden Werkstücke 9 und 10 an mehreren Schweißstellen 11 miteinander verbunden werden können, wobei die Anzahl der Stränge 5 des Lichtleiters 4 der Anzahl der Schweißstellen 11 entspricht. Anders als durch die Aufnahmevorrichtung 8 und die Form der Werkstücke 9 und 10 angedeutet, können die Schweißstellen 11 auch auf unterschiedlichen Ebenen angeordnet sein. Entscheidend ist, daß es sich um diskrete Schweißstellen 11 handelt, die folglich räumlich in Abstand voneinander angeordnet sind und zu denen hin die vereinzelten Stränge 5 des Lichtleiters 4 geführt sind. Insbesondere bei flexibler Ausführung der Stränge 5 des Lichtleiters 4 können auch schwer erreichbare Schweißstellen 11 mit dem für die Laser-Schweißung benötigten Laserlicht versorgt werden. Sofern an den einzelnen Schweißstellen 11 für den Schweißvorgang ein unterschiedlicher Leistungsbedarf besteht, kann dem dadurch Rechnung getragen werden, daß die vereinzelten Stränge 5 des Lichtleiters 4 eine voneinander verschiedene Anzahl von lichtleitenden Fasern haben.

## Patentansprüche

1. Anordnung zur Laser-Schweißung im Durchstrahlverfahren mit einer Laser-Lichtquelle (1) und einem Lichtleiter (4), in dessen eines Ende die Strahlung der Lichtquelle (1) eingekoppelt wird und der bis an die Schweißstellen (11) der miteinander zu verbindenden Werkstücke (9, 10) herangeführt ist,
**dadurch gekennzeichnet,**
**daß** der Lichtleiter (4) aus zwei oder mehreren Strängen (5) jeweils in Gestalt eines Faserbündels besteht und diese Stränge (5) zur Einkopplungsstelle (3) hin zusammengeführt und ihre Faserbündel derart miteinander verflochten sind, daß die Faserenden aller Stränge (5) in gleichmäßiger Verteilung über die Einstrahlfläche (12) hinweg miteinander vermischt sind, wobei die vereinzelten Stränge (5) des Lichtleiters (4) bis an diskrete Schweißstellen (11) der Werkstücke (9, 10) herangeführt sind.

2. Anordnung nach Anspruch 1,
**dadurch gekennzeichnet,**
**daß** an der Einstrahlfläche (12) je Flächeneinheit eine dem Verhältnis der Faserzahlen der einzelnen Stränge (5) zueinander entsprechende Anzahl der Fasern jedes Stranges (5) vorhanden ist.

3. Anordnung nach Anspruch 2,
**dadurch gekennzeichnet,**
**daß** an der Einkopplungsfläche (12) je Flächeneinheit die Fasern der einzelnen Stränge (5) entsprechend dem Verhältnis der Faserzahlen der Stränge (5) einander abwechselnd angeordnet sind.

4. Anordnung nach einem der Ansprüche 1 - 3,
**dadurch gekennzeichnet,**
**daß** jeder vereinzelte Strang (5) des Lichtleiters (4) die gleiche Anzahl Fasern hat.

5. Anordnung nach einem der Ansprüche 1 - 3,
**dadurch gekennzeichnet,**
**daß** entsprechend einem unterschiedlichen Leistungsbedarf an den Schweißstellen (11) der Werkstücke (9, 10) die Stränge (5) eine voneinander verschiedene Anzahl von Fasern haben.

6. Anordnung nach einem der Ansprüche 1- 5,
**dadurch gekennzeichnet,**
**daß** am Ende jedes Stranges (5) des Lichtleiters (4) eine Kollimationsoptik (7) angeordnet ist.

7. Anordnung nach Anspruch 6,
**dadurch gekennzeichnet,**
**daß** die Kollimationsoptiken (7) der Stränge (5) des Lichtleiters (4) an einer gemeinsamen Aufnahmevorrichtung (8) angeordnet sind.

8. Anordnung nach einem der Ansprüche 1 - 7,
**dadurch gekennzeichnet,**
**daß** die vereinzelten Stränge (5) des Lichtleiters (4) flexibel ausgebildet sind.

## Claims

1. Setup for laser beam welding by irradiation, where the setup is made up of a laser light source (1) and an optical fiber (4) one of whose ends picks up the radiation emitted by the light source (1) and whose other end is led to end at the welding points (11) of the two parts to be joined (9, 10), wherein the optical fiber (4) consists of two or more threads (5) in the shape of a bundle of fibers which threads (5) are made to join at the light feeding point (3) where their bundles of fibers interweave such that the ends of the fibers of all threads (5) mix up and spread evenly across the irradiation area (12) with the separate threads (5) of the optical fiber (4) ending at discrete welding points (11) of the parts to be joined (9, 10).

2. Setup as in claim 1, wherein every unit of irradiation area (12) hosts a number of fibers of every thread (5) equivalent to the ratio of numbers of fibers of the different threads (5).

3. Setup as in claim 2, wherein every unit of irradiation area (12) hosts the fibers of every thread (5) in an alternating arrangement reflecting the ratio of numbers of fibers of the different threads (5).

4. Setup as in one of claims 1 to 3, wherein every separate thread (5) of the optical fiber (4) has the same number of fibers in it.

5. Setup as in one of claims 1 to 3, wherein the number of fibers contained in every thread (5) differs according to the different amount of power required at the different welding points (11) of the parts (9, 10) to be joined

6. Setup as in one of claims 1 to 5, wherein a collimating lens (7) is attached to the end of every thread (5) of the optical fiber (4).

7. Setup as in claim 6, wherein the collimating lenses (7) of the threads (5) of the optical fiber (4) are located on a shared piece of holding equipment (8).

8. Setup as in one of claims 1 to 7, wherein the separate threads (5) of the optical fiber (4) are flexible.

## Revendications

1. Agencement de soudage au laser par le procédé de pénétration du rayonnement, avec une source de lumière laser (1) et un conduit de lumière (4) à une des extrémités duquel le rayonnement de la source lumineuse (1) est injecté et qui est amené aux points de soudage (11) des pièces d'oeuvre à assembler (9, 10), **caractérisé en ce que** le conduit de lumière (4) se compose de deux ou plusieurs torons (5) ayant chacun la forme d'un faisceau de fibres et **en ce que** ces torons (5) sont amenés au point d'injection (3) et leurs faisceaux de fibres sont entrelacés de telle façon que les extrémités des fibres de tous les torons (5) sont mélangées de manière uniformément répartie sur la surface de pénétration du rayonnement (12), les torons individuels (5) du conduit de lumière (4) étant amenés à des points de soudage discrets (11) des pièces d'oeuvre (9, 10).

2. Agencement selon la revendication 1, **caractérisé en ce qu'**un nombre de fibres de chaque toron (5) correspondant au rapport des nombres de fibres de chaque toron (5) entre elles par unité de surface est disponible sur la surface de pénétration du rayonnement (12).

3. Agencement selon la revendication 2, **caractérisé en ce que** les fibres des différents torons (5) sont disposées de manière mutuellement alternée sur la surface d'injection (12) en fonction du rapport des nombres de fibres des torons (5) par unité de surface.

4. Agencement selon l'une des revendications 1 à 3, **caractérisé en ce que** chaque toron (5) individuel du conduit de lumière (4) possède le même nombre de fibres.

5. Agencement selon l'une des revendications 1 à 3, **caractérisé en ce que** les torons (5) possèdent un nombre de fibres différent les uns des autres en fonction d'un besoin de puissance différent au niveau des points de soudage (11) des pièces d'oeuvre (9, 10).

6. Agencement selon l'une des revendications 1 à 5, **caractérisé en ce qu'**une optique de collimation (7) est disposée à l'extrémité de chaque toron (5) du conduit de lumière (4).

7. Agencement selon la revendication 6, **caractérisé en ce que** les optiques de collimation (7) des torons (5) du conduit de lumière (4) sont disposées sur un dispositif réceptacle (8) commun.

8. Agencement selon l'une des revendications 1 à 7, **caractérisé en ce que** les torons individuels (5) du conduit de lumière (4) sont réalisés avec une conformation flexible.
